# EUROPEAN PATENT SPECIFICATION

(11) **EP 2 375 062 B1**
(45) Date of publication and mention of the grant of the patent: **05.10.2016**
(21) Application number: 10726800.5
(22) Date of filing: 04.01.2010
(51) Int. Cl.: F03D 7/04, F03D 7/02

(54) **METHOD FOR CONTROLLING A WIND TURBINE GENERATING DEVICE**
VERFAHREN ZUR STEUERUNG EINER WINDTURBINENGENERATORVORRICHTUNG
PROCÉDÉ DE COMMANDE D'UN DISPOSITIF GÉNÉRATEUR À ÉOLIENNE

(30) Priority: 05.01.2009 JP 2009000399
(43) Date of publication of application: 12.10.2011
(73) Proprietor: Mitsubishi Heavy Industries, Ltd., Tokyo 108-8215 (JP)
(72) Inventor: TOYOHARA, Takashi, Nagasaki-shi Nagasaki 851-0392 (JP); HASHIMOTO, Masayuki, Nagasaki-shi Nagasaki 851-0392 (JP); MATSUSHITA, Takatoshi, Nagasaki-shi Nagasaki 850-8610 (JP)
(74) Representative: Intès, Didier Gérard André
(86) International application number: PCT/JP2010/050004
(87) International publication number: WO 2010/076900

(56) References cited:
- DE-A1- 10 334 448
- DE-A1-102007 058 746
- JP-A- 3 047 479
- JP-A- 6 187 037
- JP-A- 7 134 249
- JP-A- 2002 303 255
- JP-A- 2008 309 097
- US-A1- 2006 002 791
- US-A1- 2007 187 954

## Description

### {Technical Field}

The present invention relates to wind turbine generators that generate power using wind turbines for converting wind, which is a natural energy, into a rotational force, and, more specifically, it relates to wind turbine generators that include a stop-position control device for stopping the wind turbine at a desired position.

### {Background Art}

Conventionally, wind turbine generators that generate power using wind force, which is a natural energy, are known. The wind turbine generators of this type have a rotor head, which includes a nacelle mounted on a tower and wind turbine blades attached thereto, a main shaft connected so as to rotate together with this rotor head, a gearbox to which the main shaft rotated by receiving wind force with the wind turbine blades is connected, and a generator driven by the shaft output power from the gearbox. In the wind turbine generators having such a configuration, the rotor head having the wind turbine blades that convert wind force into a rotational force and the main shaft are rotated to generate the shaft output power, and the shaft output power, whose number of rotations is increased by the gearbox connected to the main shaft, is transmitted to the generator. Thus, using the shaft output power obtained by converting wind force into a rotational force as the driving source of the generator, power can be generated using wind force as the motive power of the generator.

A variety of devices, such as a hydraulic cylinder for driving wind turbine blades, a servo valve for supplying hydraulic pressure to the hydraulic cylinder, a control device, etc., are provided in a rotor head, and these devices require periodical maintenance. During maintenance, an operator needs to stop the wind turbine and enter the rotor head. However, it has been difficult to predict the stop position (angle) of the wind turbine when the rotating wind turbine is to be stopped. In addition, from the standpoint of improving the operational efficiency, there is a demand that the wind turbine should be stopped at a specific position (angle) depending on the device to be maintained.

PTL 1 discloses a technique in which, in order that a maintenance tower does not interfere with the wind turbine blades when the tower is to be laid down for maintenance, a brake is applied when the wind turbine is at a predetermined angle to stop the wind turbine at a position where a portion between the wind turbine blades (vane members) points vertically downward.

### {Citation List}

### {Patent Literature}

{PTL 1} Japanese Unexamined Patent Application, Publication No. Hei 3-47479

### {Summary of Invention}

### {Technical Problem}

However, with the technique disclosed in PTL 1, if the rotational speed of the wind turbine when applying a brake is great, not only is the stop position accuracy insufficient because of a significant angle offset due to inertia, but also the influence on the structure due to the impact is significant. Furthermore, if braking is limited to be performed under very low-speed conditions or less to avoid this influence, the wind turbine does not reach a desired position, whereby the stop position accuracy degrades. Thus, although a method is disclosed in which the brake timing is set to a position short of the intended position by a rotation angle required for slowing down, taking into consideration the inertia of the wind turbine, it is impossible to achieve sufficient stop position accuracy because of changes in the rate of deceleration in response to changes of wind force during slowing down.

The present invention has been made in view of the above-described circumstances, and an object thereof is to provide a wind turbine generator capable of easily stopping wind turbine blades at an appropriate position in a short time.

### {Solution to Problem}

A wind turbine generator according to a first aspect of the present disclosure is a wind turbine generator including pitch angle control means for controlling the pitch angle of wind turbine blades; brake means for stopping the rotation of the wind turbine blades; and position detection means for detecting the position of the wind turbine blades. The pitch angle control means controls the pitch angle to a feather side to reduce the rotational speed of the wind turbine blades upon receiving a stop signal instructing stopping the rotation of the wind turbine blades, and, in a reduced speed state, the brake means is activated when the position detection means detects arrival of the wind turbine blades at a target position set to a position short of a desired position.

According to the first aspect of the present disclosure, the pitch angle control means controls the pitch angle of the wind turbine blades to the feather side to reduce the rotational speed thereof to a predetermined speed upon receiving the stop signal for stopping the rotation of the wind turbine blades while the wind turbine blades are rotating, i.e., while the wind turbine generator is generating power. Herein, it is preferable that the predetermined speed be a very low speed at which the stop position of the wind turbine blades can be set in a desired accuracy range without stopping the wind turbine blades, taking into consideration the response speed of the brake means and the like, for example, equal to or less than 5%, preferably, in the range from 1% to 5%, of the rated number of rotations (for example, about 15 rpm). Then, while the speed is reduced to a predetermined speed, the brake means is activated when the position detection means detects arrival of the wind turbine blades at a target position set to a position short of the desired position. Herein, because the target position is set to a position short of the desired position at which the wind turbine blades are to be stopped, taking into consideration the time lag from when the brake means is activated to when the wind turbine blades are stopped, the wind turbine blades stop at the desired position by driving the brake means after the position detection means detects the target position.

In this manner, because the wind turbine blades are stopped from a state in which the rotational speed thereof is maintained at a predetermined speed, the influence on the wind turbine generator due to a sudden stop can be prevented. Furthermore, because the rotation of the wind turbine blades is maintained at a predetermined rotational speed, the amount of movement of the wind turbine blades from when the position of the wind turbine blades is detected to when the wind turbine blades are stopped is very small. Thus, the stop position accuracy can be maintained at a high level. In this manner, because the wind turbine blades can be easily stopped at the desired position, for example, the operational efficiency during maintenance is improved.

For example, a disc brake is suitably used as the brake means, and, in such a case, a brake pad, a brake caliper, etc., for controlling the brake disc are provided. Furthermore, the pitch control means can also perform control such that, while the wind turbine generator is generating power, the pitch angle of the wind turbine blades is controlled to reduce the rotational speed of the wind turbine blades and such that, when the rotational speed of the wind turbine blades reaches the predetermined rotational speed, the pitch angle of the wind turbine blades is switched again to maintain the predetermined rotational speed. In addition, while the wind turbine generator is stopped, the pitch angle may be controlled so as to provide a predetermined rotational speed, from a stopped state.

A wind turbine generator according to a second aspect of the present disclosure is a wind turbine generator including pitch angle control means for controlling the pitch angle of wind turbine blades so that the wind turbine blades rotate at a predetermined rotational speed; a magnet provided on a disc rotated together with the wind turbine blades; and an electromagnet provided at a position opposite the magnet when the wind turbine blades are stopped at a desired position. The pitch angle control means controls the pitch angle to a feather side to reduce the rotational speed of the wind turbine blades to a predetermined speed upon receiving a stop signal instructing stopping the rotation of the wind turbine blades, and, in a reduced speed state, the rotation of the wind turbine blades is stopped by exciting the electromagnet to attract the magnet thereto.

According to the second aspect of the present disclosure, the pitch angle control means controls the pitch angle of the wind turbine blades to the feather side to reduce the rotational speed thereof to a predetermined speed upon receiving the stop signal for stopping the rotation of the wind turbine blades while the wind turbine blades are rotating, i.e., while the wind turbine generator is generating power. Then, the magnet provided on the disc rotated together with the wind turbine blades and the electromagnet provided at the position opposite the magnet when the wind turbine blades are stopped at the desired position are excited. As a result, the magnet is attracted to the electromagnet and is fixed to the electromagnet. Because the magnet is provided on the disc rotated together with the wind turbine blades, fixing of the magnet to the electromagnet stops the rotation of the disc, and, as a result, the rotation of the wind turbine blades is also stopped.

In this manner, because the wind turbine blades are stopped from a state in which the rotational speed thereof is maintained at a predetermined speed, the influence on the wind turbine generator due to a sudden stop can be prevented. Furthermore, because the electromagnet is provided in advance at the position opposite the magnet provided on the disc when the wind turbine blades are stopped at the desired position, i.e., the position at which the wind turbine blades are to be stopped, the wind turbine blades can be easily stopped at the desired position only by exciting the electromagnet, without performing position detection of the wind turbine blades and the like. Thus, for example, the operational efficiency during maintenance is improved. Although either the magnet or the electromagnet has to be securely provided at the position corresponding to the desired position, i.e., the position at which the wind turbine blades are to be stopped, the design as to which of these is to be fixed can be appropriately modified. That is, when the position of the electromagnet is fixed, the magnet is provided on the disc, at the position opposite the electromagnet when the wind turbine blades are stopped at the desired position. In this case too, because the disc is rotated together with the wind turbine blades, fixing of the magnet to the electromagnet stops the rotation of the disc at the desired position, and, as a result, the rotation of the wind turbine blades is also stopped at the desired position.

Similarly, the pitch control means can also perform control such that, while the wind turbine generator is generating power, the pitch angle of the wind turbine blades is controlled to reduce the rotational speed of the wind turbine blades and such that, when the rotational speed of the wind turbine blades reaches the predetermined rotational speed, the pitch angle of the wind turbine blades is switched again to maintain the predetermined rotational speed. While the wind turbine generator is stopped, the pitch angle may be controlled so as to provide a predetermined rotational speed, from a stopped state.

A wind turbine generator according to a third aspect of the present disclosure is a wind turbine generator including pitch angle control means for controlling the pitch angle of the wind turbine blades; rotation means for rotating the wind turbine blades at a predetermined speed; and position detection means for detecting the position of the wind turbine blades. The pitch angle control means controls the pitch angle to a feather side upon receiving a stop signal instructing stopping the rotation of the wind turbine blades, and then, the rotation means is driven to rotate the wind turbine blades, and the rotation means is stopped when the position detection means detects arrival of the wind turbine blades at a target position set to a position short of a desired position.

According to the third aspect of the present disclosure, the pitch angle control means controls the pitch angle to a feather side upon receiving the stop signal for stopping the rotation of the wind turbine blades, and the rotation means rotates the wind turbine blades at a predetermined speed after the rotation of the wind turbine blades has been slowed down or stopped. A motor or the like that provides a predetermined rotational speed is employed as the rotation means. Note that, as described above, a predetermined speed is set to a very low speed at which the stop position of the wind turbine blades can be set in a desired accuracy range without stopping the wind turbine blades. Then, when the position detection means detects arrival of the wind turbine blades at the target position set to a position short of a desired position while the rotation means rotates the wind turbine blades at a predetermined speed, driving of the rotation means is stopped. Herein, because the target position is set to a position short of the desired position at which the wind turbine blades are to be stopped, taking into consideration the time lag from when the rotation means is stopped to when the wind turbine blades are stopped, the wind turbine blades stop at the desired position by stopping driving of the rotation means after the position detection means detects the target position.

In this manner, because the rotation means rotates the wind turbine blades at a very low speed, the wind turbine blades can be easily stopped at the desired position by stopping the rotation means after detecting arrival of the wind turbine blades at a position short of the desired position.

A method of controlling a wind turbine generator according to a fourth aspect of the present disclosure is a method of controlling a wind turbine generator including pitch angle control means for controlling the pitch angle of the wind turbine blades; brake means for stopping the rotation of the wind turbine blades; and position detection means for detecting the position of the wind turbine blades. The method includes a step in which the pitch angle control means controls the pitch angle to a feather side to reduce the rotational speed of the wind turbine blades to a predetermined speed upon receiving a stop signal instructing stopping the rotation of the wind turbine blades, and a step in which, in a reduced speed state, the brake means is activated when the position detection means detects arrival of the wind turbine blades at a target position set to a position short of a desired position.

A method of controlling a wind turbine generator according to a fifth aspect of the present disclosure, which corresponds to the invention defined by claim 1, is a method of controlling a wind turbine generator including pitch angle control means for controlling the pitch angle of wind turbine blades; a magnet provided on a disc rotated together with the wind turbine blades; and an electromagnet provided at a position opposite the magnet when the wind turbine blades are stopped at a desired position. The method includes a step in which the pitch angle control means controls the pitch angle to a feather side to reduce the rotational speed of the wind turbine blades to a predetermined speed upon receiving a stop signal instructing stopping the rotation of the wind turbine blades; and a step in which, in a reduced speed state, the rotation of the wind turbine blades is stopped by exciting the electromagnet to attract the magnet thereto.

A method of controlling a wind turbine generator according to a sixth aspect of the present disclosure is a method of controlling a wind turbine generator including pitch angle control means for switching the pitch angle of wind turbine blades; rotation means for rotating the wind turbine blades at a predetermined speed; and position detection means for detecting the position of the wind turbine blades. The method includes a step in which the pitch angle control means controls the pitch angle to a feather side upon receiving a stop signal instructing stopping the rotation of the wind turbine blades; a step in which the rotation means is driven to rotate the wind turbine blades; and a step in which the rotation means is stopped when the position detection means detects arrival of the wind turbine blades at a target position set to a position short of a desired position.

### {Advantageous Effects of Invention}

In this manner, the wind turbine generator of the present invention can easily stop the wind turbine blades at a desired position. Furthermore, because there is no need to suddenly stop the wind turbine blades while generating power, an impact exerted on the wind turbine generator due to a sudden stop can be prevented.

### {Brief Description of Drawings}

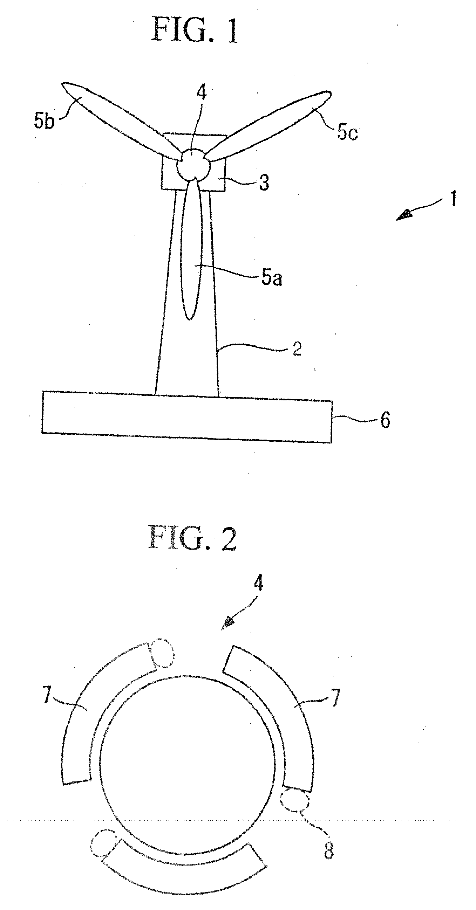

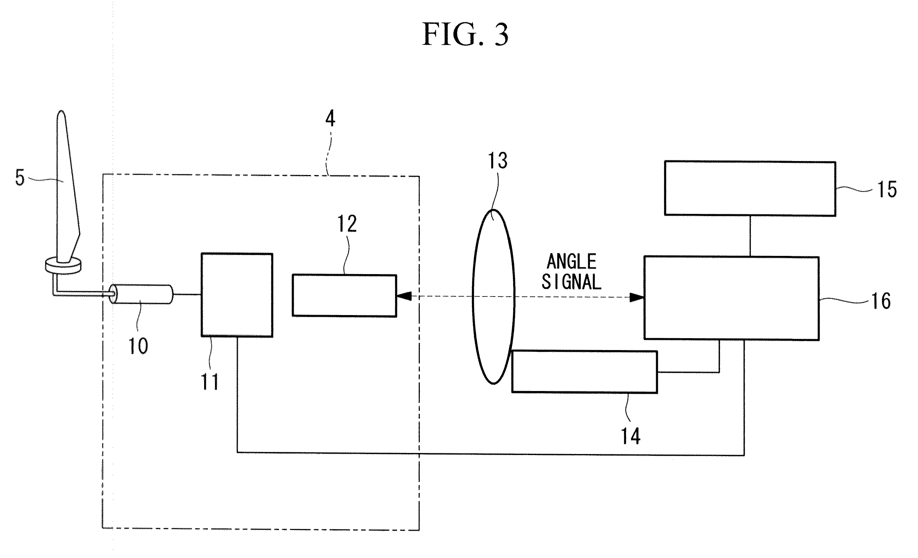

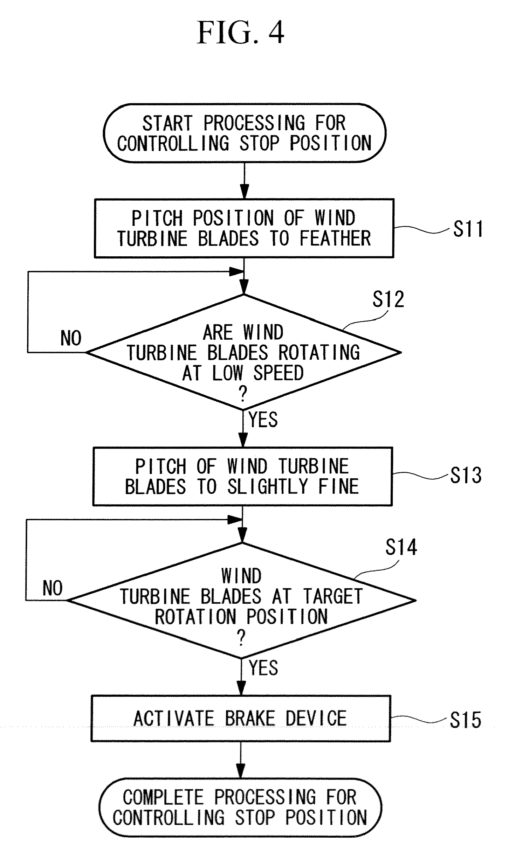

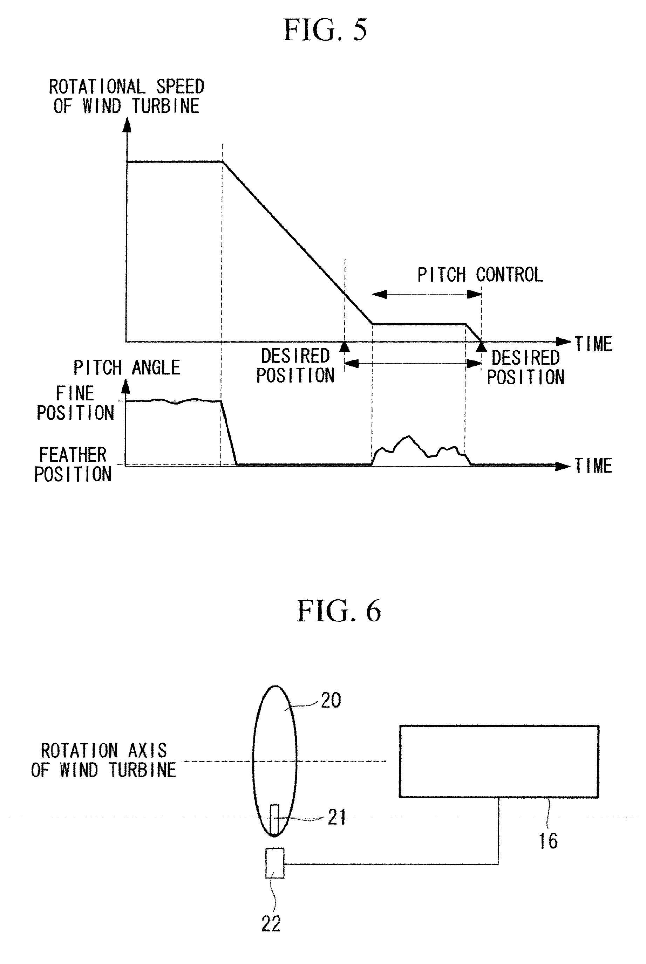

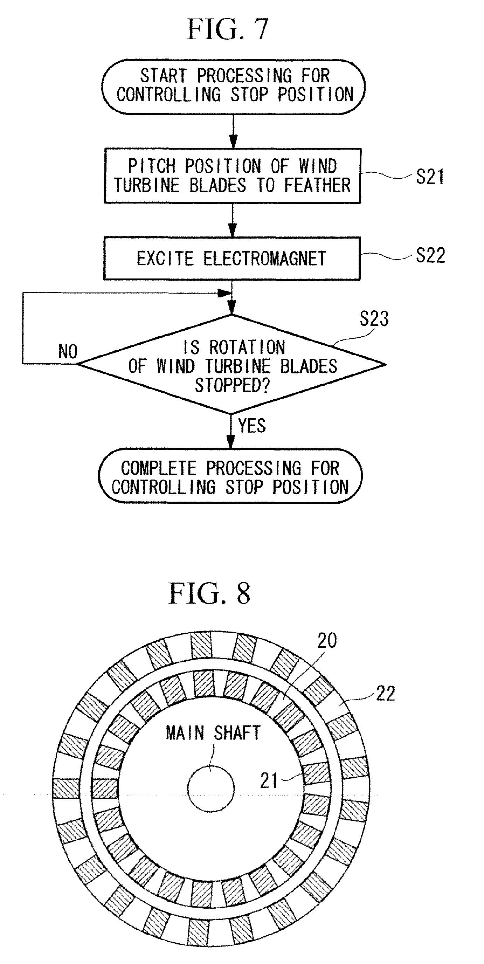

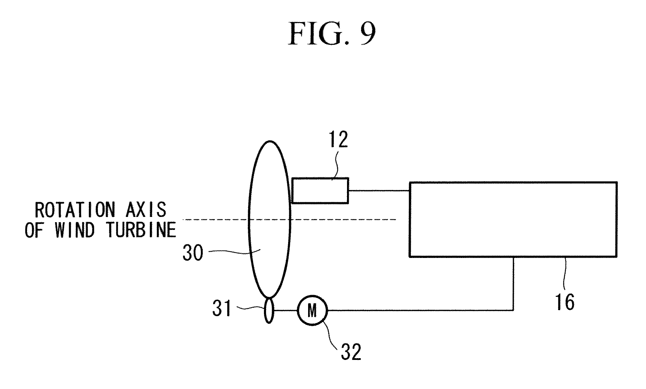

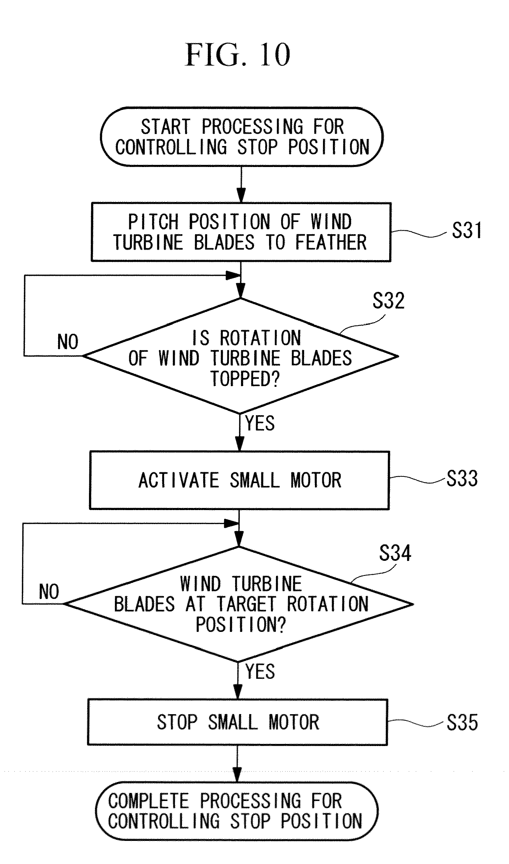

{FIG. 1} FIG. 1 is a front view showing, in outline, the configuration of a wind turbine generator of the present disclosure.
{FIG. 2} FIG. 2 is a back view showing, in outline, a rotor head of the wind turbine generator of the present disclosure.
{FIG. 3} FIG. 3 is a block diagram showing, in outline, the configuration of the wind turbine generator according to a first embodiment of the present disclosure.
{FIG. 4} FIG. 4 is a flowchart showing processing for controlling the stop position of wind turbine blades of the wind turbine generator according to the first embodiment of the present disclosure.
{FIG. 5} FIG. 5 is a diagram showing the relationship between the rotational speed and the pitch angle of the wind turbine blades of the present disclosure.
{FIG. 6} FIG. 6 is a block diagram showing, in outline, the configuration of a wind turbine generator according to a second embodiment of the present disclosure.
{FIG. 7} FIG. 7 is a flowchart showing processing for controlling the stop position of wind turbine blades of the wind turbine generator according to the second embodiment of the present disclosure.
{FIG. 8} FIG. 8 is a schematic diagram showing a disc and the attaching positions of magnets in a modification of the wind turbine generator according to the second embodiment of the present disclosure.
{FIG. 9} FIG. 9 is a block diagram showing, in outline, the configuration of a wind turbine generator according to a third embodiment of the present disclosure.
{FIG. 10} FIG. 10 is a flowchart showing processing for controlling the stop position of wind turbine blades of the wind turbine generator according to the third embodiment of the present disclosure.

### {Description of Embodiments}

Embodiments of a wind turbine generator of the present disclosure will be described in detail below, in the sequence of a first embodiment, a second embodiment, and a third embodiment, with reference to the drawings.

### First Embodiment

FIG. 1 is a front view showing, in outline, the configuration of a wind turbine generator of the present disclosure.

As shown in FIG. 1, a wind turbine generator 1 includes a tower 2 installed upright on supporting ground 6, a nacelle 3, a rotor head 4, and three wind turbine blades 5a, 5b, and 5c (hereinafter generally referred to as "wind turbine blades 5" when no specific distinction is needed). The nacelle 3 is provided on top of the tower 2 via a bearing device so as to be capable of turning about the axis of the tower 2. The rotor head 4 is attached to one end of the nacelle 3 via a main shaft (not shown) so as to be rotatable about the horizontal axis of the nacelle 3. As shown in FIG. 2, fences 7 are provided on the back surface of the rotor head 4, at positions where the wind turbine blades 5 are attached, and hatches 8 are provided between the fences 7. During maintenance, an operator can enter or exit through the hatches 8. The wind turbine blades 5 are attached radially around the rotation axis of the rotor head 4 at equal intervals, and, as a result, the force of the wind blowing against the wind turbine blades 5 in the direction of the rotation axis of the rotor head 4 is converted into the motive power that rotates the rotor head 4 about the rotation axis. Furthermore, the pitch angle of the wind turbine blades 5 with respect to the wind direction can be controlled with a pitch control device 11 described below.

FIG. 3 is a block diagram showing, in outline, the configuration of the wind turbine generator according to this embodiment. The rotor head 4 includes the above-described wind turbine blades 5 attached thereto, a hydraulic cylinder 10, a pitch control device 11, and an angle detection device 12. The hydraulic cylinder 10 drives the wind turbine blades 5 attached to the rotor head 4. The pitch control device 11 controls the pitch angle of the wind turbine blades 5 appropriately according to the conditions, such as the wind speed, by controlling the hydraulic pressure supplied to the hydraulic cylinder 10. The angle detection device 12 detects the azimuth angle of the wind turbine blades 5 as an angle signal and outputs the detected angle signal to a stop-position control device 16 described below.

The nacelle 3 contains a gearbox (not shown), a generator (not shown), a brake disc 13, a brake device 14, a rotational-speed detection device 15, and a stop-position control device 16. The generator is connected to the rotor head 4 via the gearbox provided on the main shaft coaxial with the rotor head 4; i.e., the rotation of the rotor head 4 is accelerated by the gearbox to drive the generator. Thus, generator output power can be obtained from the generator. The brake disc 13 is a rotary member that is connected to the rotor head 4 via the main shaft to slow down or stop the rotation of the rotor head 4 and the wind turbine blades 5. By driving and controlling the brake disc 13, the brake device 14 slows down or stops the rotation of the rotor head 4 and the wind turbine blades 5 and cancels the slowing down or stopping thereof. The rotational-speed detection device 15 detects the number of rotations of the wind turbine blades 5 due to the wind force per unit time and sends the detection result to the stop-position control device 16.

The stop-position control device 16 performs control to stop the wind turbine blades 5 at a desired position (angle). More specifically, when the rotation of the wind turbine blades 5 is to be stopped, a control signal for switching the pitch of the wind turbine blades 5 from fine (power generating side) to feather (stop side) is sent to the pitch control device 11 to decrease the rotational speed of the wind turbine blades 5. Next, the rotational speed of the wind turbine blades 5 is calculated on the basis of the number of rotations received from the rotational-speed detection device 15, and, when the rotational speed approaches a predetermined speed, a control signal for switching the pitch of the wind turbine blades 5 again slightly to the fine side is sent to the pitch control device 11 so as not to stop the rotation. Then, when the wind turbine blades 5 are at a desired position (angle), a brake signal is sent to the brake device 14 according to the detection result sent from the angle detection device 12 to stop the rotation of the wind turbine blades 5.

Next, a processing procedure for controlling the stop position of the wind turbine blades 5 performed by the stop-position control device 16 of the above-described wind turbine generator will be described on the basis of the flowchart in FIG. 4.

Once the processing for controlling the stop position is started, in step S11, the stop-position control device 16 sends a control signal to the pitch control device 11 for switching the pitch angle of the wind turbine blades 5 from the fine side to the feather side. The pitch control device 11 switches the pitch angle of the wind turbine blades 5 from the fine side to the feather side according to this signal. Thus, the wind turbine blades 5 are oriented in a direction in which wind is allowed to escape, and the rotational speed of the wind turbine blades 5 begins to decrease, as shown in FIG. 5.

In step S12, it is determined whether or not the rotational speed of the wind turbine blades 5 has dropped below a predetermined speed. More specifically, the rotational-speed detection device detects the number of rotations of the wind turbine blades 5, and detection result data is sent to the stop-position control device 16. The stop-position control device 16 calculates the rotational speed of the wind turbine blades 5 on the basis of the received data and determines whether or not the rotational speed of the wind turbine blades 5 has dropped below a predetermined speed by determining, for example, whether or not the calculated rotational speed is below a predetermined threshold. When it is determined that the rotational speed has not dropped below the predetermined speed, step S12 is repeated, and when it is determined that the rotational speed has dropped below the predetermined speed, the process proceeds to the subsequent step S13. Note that the predetermined rotational speed is set to a very low speed at which the stop position of the wind turbine blades 5 can be determined without stopping the wind turbine blades 5, taking into consideration the response speed of the brake device 14 and the like, for example, equal to or less than 5%, preferably, in the range from 1% to 5%, of the rated number of rotations (for example, about 15 rpm).

Next, in step S13, the stop-position control device 16 sends a control signal to the pitch control device 11 for switching the pitch angle of the wind turbine blades 5 from the feather side to the slightly fine side. The pitch control device 11 switches the pitch angle of the wind turbine blades 5 from the feather side to the slightly fine side according to this signal. Herein, the wind turbine blades 5 need to keep rotating at the predetermined rotational speed in step S12 or at a speed equal to or less than the predetermined rotational speed without stopping the wind turbine blades 5. Therefore, "the slightly fine side" means a pitch angle that can provide the predetermined rotational speed, and the pitch angle of the wind turbine blades 5 is switched to such an angle in step S13. Thus, the wind blows against the wind turbine blades 5 again, whereby the wind turbine blades 5 are kept rotating at the predetermined rotational speed.

Next, in step S14, it is determined whether or not the specific wind turbine blade 5a of the three wind turbine blades 5a, 5b, and 5c is located at the target position while the wind turbine blades 5 are rotated at a predetermined rotational speed. Herein, the target position is set to a position short of the position at which the wind turbine blades are to be stopped, taking into consideration the time from when the brake device is activated to when the wind turbine blades are stopped depending on the response speed of the brake device 14 and the rotational speed of the wind turbine blades. The determination of whether or not the wind turbine blade 5a is located at the target position is performed by, for example, the angle detection device 12 detecting the position of the wind turbine blade 5a and sending it as an angle signal to the stop-position control device 16. The stop-position control device 16 determines whether or not the wind turbine blade 5a has reached the target position according to the received angle signal. When it is determined that the wind turbine blade 5a has not reached the target position, step S14 is repeated until it is determined that the wind turbine blade 5a has reached the target position. When it is determined that the wind turbine blade 5a has reached the target position, the process proceeds to the subsequent step S15. Note that the target position is set to a position short of the position at which the wind turbine blades are to be stopped, depending on the response speed of the brake device 14 and the like.

In step S15, the stop-position control device 16 sends a control signal to the brake device 14 to stop the brake disc 13, and the brake device 14 stops the rotation of the brake disc 13 according to the control signal. As described above, because the rotor head 4 to which the wind turbine blades 5 are attached is connected to the brake disc 13 via the main shaft, stopping the brake disc 13 stops not only the rotor head 4 but also the wind turbine blades 5 at the desired positions. Thus, the processing for controlling the stop position is completed.

In this manner, in this embodiment, the rotation speed of the wind turbine blades 5 is reduced to a predetermined speed by the pitch angle control and, in a reduced speed state, the brake device is activated according to the detection result of the angle detection device to stop the wind turbine blades. Thus, the wind turbine blades 5 can be easily stopped at a desired position. This enables, for example, the hatch 8 of the rotor head 4 to be stopped at a position at which an operator can easily enter or exit. Thus, the operational efficiency during maintenance is improved. Furthermore, because the pitch control of the wind turbine blades 5 is performed to maintain the low-speed rotation before the brake device 14 is activated, the accuracy of the stop position of the wind turbine blades 5 can be maintained at a high level and an impact exerted on the wind turbine generator due to sudden braking can be prevented.

### Second Embodiment

Next, a second embodiment of the present disclosure will be described using FIGS. 6 and 7. Descriptions of the configurations common to the above-described first embodiment will be omitted, and only descriptions of configurations different therefrom will be given.

This embodiment is different in that a disc 20 connected to the rotor head 4 via the main shaft is provided, instead of the brake disc 13 and the brake device 14 in the first embodiment, and the stop position of the wind turbine blades 5 is controlled by an electromagnet 22 and a magnet 21 attached to the disc 20. That is, the magnet 21 is provided on the disc 20 in advance, at a position corresponding to the position at which the rotor head 4 or the wind turbine blades 5 are to be stopped, and the electromagnet 22 that can be magnetized in such a direction that it attracts the magnet 21 by a control signal from the stop-position control device 16 is provided. Furthermore, the electromagnet 22 is provided opposite the magnet 21 in the disc 20, at a position corresponding to the position at which the wind turbine blades 5 are to be stopped.

The processing procedure for controlling the stop position of the thus-configured wind turbine generator will be described below on the basis of the flowchart in FIG. 7.

When the processing for controlling the stop position is started, in step S21, the stop-position control device 16 sends a control signal to the pitch control device 11 for switching the pitch angle of the wind turbine blades 5 from the fine side to the feather side. The pitch control device 11 switches the pitch angle of the wind turbine blades 5 from the fine side to the feather side according to this signal. Thus, the wind turbine blades 5 are oriented in a direction in which wind is allowed to escape, and the rotational speed of the wind turbine blades 5 begins to decrease.

After the rotational speed of the wind turbine blades 5 has decreased to some extent, in the subsequent step S22, the stop-position control device 16 starts to excite the electromagnet 22, and the electromagnet 22 is magnetized to a level capable of attracting the magnet 21. Next, in step S23, it is determined whether or not the rotation of the wind turbine blades 5 has stopped. That is, it is determined whether or not the electromagnet 22 is magnetized to a level sufficient to attract the magnet 21, thereby attracting the magnet 21, having been rotated with the wind turbine blades 5, to the electromagnet 22 and stopping the disc 20 at a position at which the magnet 21 is located opposite the electromagnet 22; as a result, the wind turbine blades 5 are stopped at a desired position. When it is determined that the wind turbine blades 5 are stopped, the processing for controlling the stop position is completed.

In this embodiment, because the wind turbine blades 5 can be easily stopped at a desired position in this manner, for example, the hatch 8 of the rotor head 4 can be stopped at a position at which an operator can easily enter or exit. Thus, the operational efficiency during maintenance is improved. Furthermore, in this embodiment, even if the wind turbine generator is not generating power and the wind turbine blades 5 are stopped, as long as there is a gentle breeze that can rotate the wind turbine blades 5, it is possible to stop the wind turbine blades 5 at a desired position. In addition, by providing the magnet 21 at a desired position in advance, the stop position can be controlled without detecting the position of the wind turbine blades 5.

Although this embodiment is configured such that the magnet 21 is provided at one location in the disc 20, for example, a configuration in which a plurality of permanent magnets are provided at equal intervals on the outer peripheral side of the disc and electromagnets are provided so as to surround the outer periphery of the disc, as shown in FIG. 8, is possible. In this case, the wind turbine blades can be stopped at a desired position by magnetizing only the electromagnet at the position at which they are to be stopped.

### Third Embodiment

Next, a third embodiment of the present disclosure will be described using FIGS. 9 and 10. Descriptions of the configurations common to the above-described first embodiment will be omitted, and only descriptions of configurations different therefrom will be given.

This embodiment is different in that a first gear 30 is provided, instead of the brake disc 13 and the brake device 14 in the first embodiment, and a second gear 31 that is connected to the first gear 30 and can be driven by a motor 32 is provided. That is, the first gear 30 is provided so as to be connected to the rotor head 4 via the main shaft and rotated together with the wind turbine blades 5. The second gear 31 is provided so as to be driven by the small motor 32, so that the rotation of the second gear 31 is transmitted to the first gear 30. The motor 32 is driven and controlled by the stop-position control device 16, and a small output motor that can rotate the wind turbine blades 5 at low speed, e.g., a predetermined rotational speed as in the above-described first embodiment, is employed.

The processing procedure for controlling the stop position of the thus-configured wind turbine generator will be described below on the basis of the flowchart in FIG. 10.

When the processing for controlling the stop position is started, in step S31, the stop-position control device 16 sends a control signal to the pitch control device 11 for switching the pitch angle of the wind turbine blades 5 from the fine side to the feather side. The pitch control device 11 switches the pitch angle of the wind turbine blades 5 from the fine side to the feather side according to this signal. Thus, the wind turbine blades 5 are oriented in a direction in which wind is allowed to escape, and the rotational speed of the wind turbine blades 5 begins to decrease.

After the rotational speed of the wind turbine blades 5 has decreased sufficiently, in the subsequent step S32, it is determined whether or not the rotation of the wind turbine blades 5 has stopped. When it is determined that the rotation of the wind turbine blades 5 has stopped, the process proceeds to the subsequent step S33. In step S33, the stop-position control device 16 actuates the motor 32. Thus, the rotational force of the motor 32 is transmitted to the second gear 31 and causes the second gear 31 to rotate at low speed. The rotation of the second gear 31 is transmitted to the first gear 30 and causes the first gear 30 to rotate. The rotation of the first gear 30 causes the wind turbine blades 5 and the rotor head 4 connected to the first gear 30 via the main shaft to rotate at low speed.

Next, in step S34, it is determined whether or not the specific wind turbine blade 5a of the three wind turbine blades 5a, 5b, and 5c is located at the target rotation position while the wind turbine blades 5 are rotated at low speed by the driving force of the motor 32. More specifically, the angle detection device 12 detects, for example, the position of the wind turbine blade 5a and sends it as an angle signal to the stop-position control device 16. The stop-position control device 16 determines whether or not the wind turbine blade 5a has reached the target position according to the received angle signal. When it is determined that the wind turbine blade 5a has not reached the target position, step S34 is repeated until it is determined that the wind turbine blade 5a has reached the target position. When it is determined that the wind turbine blade 5a has reached the target position, the process proceeds to the subsequent step S35. Note that the target position is set to a position short of the position at which the wind turbine blades are to be stopped, i.e., the position short of a desired position, taking into consideration the response speed of the motor 32.

In step S35, a control signal for stopping driving of the motor 32 is sent from the stop-position control device 16 to the motor 32, and driving of the motor 32 is stopped according to this control signal. Thus, the rotation of the second gear 32 is stopped, and the rotation of the first gear 30 is also stopped accordingly. As described above, because the rotor head 4 to which the wind turbine blades 5 are attached is connected to the first gear 30 via the main shaft, stopping the first gear 30 stops not only the rotor head 4 but also the rotor blades 5 at the desired positions. Thus, the processing for controlling the stop position is completed.

In this embodiment, because the wind turbine blades 5 can be easily stopped at a desired position in this manner, for example, the hatch 8 of the rotor head 4 can be stopped at a position at which an operator can easily enter or exit. Thus, the operational efficiency during maintenance is improved. Furthermore, because the wind turbine blades 5 are stopped by the motor 32 from a state in which they are rotated at low speed, the accuracy of the stop position of the wind turbine blades 5 can be maintained at a high level, and an impact exerted on the wind turbine generator due to sudden braking can be prevented. In addition, even in a windless state or in a state in which the wind turbine blades 5 are stopped, the wind turbine blades 5 can be stopped at a desired position by driving the motor 32.

### {Reference Signs List}

- 3:: nacelle
- 4:: rotor head
- 5a, 5b, 5c:: wind turbine blade
- 7:: fence
- 8:: hatch
- 12:: angle detection device
- 13:: brake disc
- 14:: brake device
- 15:: rotational-speed detection device
- 16:: stop-position control device
- 20:: disc
- 21:: magnet
- 22:: electromagnet
- 30:: first gear
- 31:: second gear
- 32:: motor

## Claims

1. A method of controlling a wind turbine generator (1) including pitch angle control means (11) for controlling the pitch angle of wind turbine blades (5); **characterized in that** a magnet (21) is provided on a disc (20) rotated together with the wind turbine blades (5); and an electromagnet (22) is provided at a position opposite the magnet (21) when the wind turbine blades (5) are stopped at a desired position, the method comprising:
a step in which the pitch angle control means (11) controls the pitch angle to a feather side to reduce the rotational speed of the wind turbine blades (5) to a predetermined speed upon receiving a stop signal instructing stopping the rotation of the wind turbine blades (5); and
a step in which, in a reduced speed state, the rotation of the wind turbine blades (5) is stopped by exciting the electromagnet (22) to attract the magnet (21) thereto.

## Patentansprüche

1. Verfahren zur Steuerung eines Windturbinengenerators (1), umfassend Mittel (11) zur Steuerung des Neigungswinkels von Windturbinenschaufeln (5), **dadurch gekennzeichnet, dass** ein Magnet (21) auf einer Schreibe (20), die zusammen mit den Windturbinenschaufeln (5) gedreht wird, vorgesehen ist, und dass ein Elektromagnet (22) an einer Position gegenüber dem Magneten (21) vorgesehen ist, wenn die Windturbinenschaufeln an einer gewünschten Position angehalten werden, wobei das Verfahren umfasst:
einen Schritt, bei dem die Mittel (11) zur Steuerung des Neigungswinkels den Neigungswinkel in eine aufgerichtete Position steuern, um bei Erhalt eines Haltesignals, welches das Anhalten der Drehung der Windturbinenschaufeln (5) anweist, die Drehgeschwindigkeit der Windturbinenschaufeln (5) auf eine vorgegebenen Geschwindigkeit zu reduzieren, und
einen Schritt, bei dem in einem Zustand mit reduzierter Geschwindigkeit die Drehung der Windturbinenschaufeln (5) durch Erregen des Elektromagneten (22), um den Magneten (21) dorthin anzuziehen, angehalten wird.

## Revendications

1. Procédé de commande d'une éolienne (1) comprenant des moyens de commande d'angle de pas (11) pour commander l'angle de pas des pales d'éolienne (5) ; **caractérisé en ce qu'**un aimant (21) est prévu sur un disque (20) entraîné en rotation avec les pales d'éolienne (5) ; et un électroaimant (22) est prévu dans une position opposée à l'aimant (21) quand les pales d'éolienne (5) sont arrêtées dans une position souhaitée, le procédé comportant :
une étape dans laquelle les moyens de commande d'angle de pas (11) commandent l'angle de pas vers un côté de mise en drapeau pour réduire la vitesse de rotation des pales d'éolienne (5) à une vitesse prédéterminée lors de la réception d'un signal d'arrêt instruisant l'arrêt de la rotation des pales d'éolienne (5) ; et
une étape dans laquelle, dans un état de vitesse réduite, la rotation des pales d'éolienne (5) est arrêtée en excitant l'électroaimant (22) pour attirer l'aimant (21).
